**Europäisches Patentamt**

**European Patent Office**

**Office européen des brevets**

(11) Veröffentlichungsnummer: **0 435 049 A2**

# (12) EUROPÄISCHE PATENTANMELDUNG

(21) Anmeldenummer: **90123642.2**

(22) Anmeldetag: **08.12.90**

(51) Int. Cl.⁵: **C08J 9/42,** C08K 3/20, C08K 3/38, C08K 5/02, C08L 33/06, C08G 18/82

(30) Priorität: **23.12.89 DE 3942851**

(43) Veröffentlichungstag der Anmeldung: **03.07.91 Patentblatt 91/27**

(84) Benannte Vertragsstaaten: **DE ES FR GB IT**

(71) Anmelder: **Beiersdorf Aktiengesellschaft Unnastrasse 48 W-2000 Hamburg 20(DE)**

(72) Erfinder: **Kehler, Harald Bussestrasse 1 W-2000 Hamburg 60(DE)** Erfinder: **Kramer, Jürgen Stieglitzweg 30 W-2107 Rosengarten(DE)** Erfinder: **Junghans, Andreas Wendloher Weg 15 W-2000 Hamburg 20(DE)** Erfinder: **Zimmermann, Dieter Drosselstieg 8 W-2155 York(DE)**

(54) **Imprägnierlatex für PU-Schaum.**

(57) Imprägnierlatex für offenzelligen Polyurethanschaum, enthaltend als wäßrige Dispersion bzw. Aufschlämmung neben Flammschutzmitteln als Bindemittel ein carboxylgruppenhaltiges Acrylsäureestercopolymer.

EP 0 435 049 A2

## IMPRÄGNIERLATEX FÜR PU-SCHAUM

Die Erfindung betrifft einen Imprägnierlatex für offenzelligen PU-Schaum.

Seit Jahren werden Schaumstoffe aus Polyurethan durch Imprägnierung mit einem Flammschutz/Bindemittelgemisch flammfest ausgerüstet.

Der ausgerüstete Schaum soll selbstverlöschend und nicht schmelzend sein. In der Flamme darf nur eine geringe Rauchgasentwicklung stattfinden. Darüber hinaus muß der imprägnierte Schaum eine gewisse Reißdehnung (≥ 100 %) haben und darf diese nach längerer Exposition bei hohen Temperaturen (≥ 3 d/200° C) nicht vollständig verlieren (Reißdehnung ≥ 40%).

Stand der Technik sind hier die DE-OS 37 32 238 und DE-OS 37332 239.

Die Flammschutzmischung besteht hierbei aus Aluminiumhydroxid (alternativ Zinkborat), Antimontrioxid und Chlorparaffin in wäßriger Aufschlämmung.

Das Bindemittel besteht aus einer Chlorbutadiendispersion, welche mit Zinkoxid vernetzt wird.

Polyurethan-Schaumstoff mit einem Raumgewicht von etwa 20 kg/m³ wird mit der Imprägniermischung derart getränkt, daß sich nach der Trocknung (1 h/120° C) ein Raumgewicht von etwa 100 kg/m³ ergibt.

Ein derartiger Schaum genügt den Anforderungen an die Feuerfestigkeit. Unmittelbar nach dem Trocknen stellt sich auch eine Reißdehnung > 100 % ein. Die geforderte Reißdehnung (≥ 40 %) nach Temperaturbelastung ( 3 d/200° C) konnte bisher jedoch nicht erreicht werden.

Es war die Aufgabe, hier Abhilfe zu schaffen.

Gelöst wird diese Aufgabe durch den in den Ansprüchen näher gekennzeichneten Imprägnierlatex.

Der Imprägnierlatex erfüllt die genannten Anforderungen. Weitere Vorteile sind die Lichtechtheit (UV-Beständigkeit) und die Möglichkeit, thermisch zu prägen.

Als Flammschutzmischung kann auf die bisher verwendeten zurückgegriffen werden.

Bei dem erfindungsgemäß eingesetzten Bindemittel handelt es sich um eine wäßrige Dispersion carboxylgruppenhaltiger Acrylsäureester von Alkoholen mit 2 - 8 C-Atomen, bevorzugt n-Butylalkohol , die mit Comonomeren (Tg > 0° C), bevorzugt Vinylacetat, polymerisiert werden, so daß der resultierende Glasübergangsbereich noch deutlich unter 0° C liegt, bevorzugt unter -10° C liegt.

Freigesetzt wird die Dispersion mit einem Feststoffgehalt von vorzugsweise 50 Gewichts-%.

Der getrocknete Film des reinen Bindemittels ist klar, transparent und mit leicht klebender Oberfläche. Der Film hat eine Rohdichte von ca. 1,1 g/cm³ , eine Reißfestigkeit von ca. 1,5 N/mm² und eine Reißdehnung von ca. 2.500 %. Die Glastemperatur des Polymeren liegt bei ca. - 13° C.

Die enthaltenen Carboxylgruppen, bevorzugt aus Acrylsäure in einem Gehalt zwischen 1 und 5 Gewichts-%, machen die Dispersion einer ionischen Vernetzung zugänglich (z.B. mit Zinkoxid) . Demgemäß kann vorteilhaft Zinkoxid mitverwendet werden.

Außerdem kann das Produkt weitere Hilfsmittel enthalten (z.B. Alterungs- und Konservierungsmittel).

Beispiele:

Eine offenzellige Polyurethanschaumstoff-Bahn von 30 mm Dicke und einem Raumgewicht von 20 kg/m³ wurde mit den folgenden Mischungen getränkt und eine Stunde bei 120° C getrocknet, so daß sich ein Schaumstoff mit einem Raumgewicht von 100 kg/m³ ergab.

1. Tränkmischung: (Gewichtsanteile beziehen sich auf Trockensubstanz)

```
175 Teile carboxylgruppenhaltiges
    Acrylsäureestercopolymer (Bindemittel als 50%ige
    Dispersion eingesetzt)
200 Teile Aluminiumhydroxid ⎫ Flammschutzmittel (als
 10 Teile Chlorparaffin      ⎬ 70%ige Aufschlämmung in
 15 Teile Animontrioxid      ⎭ Wasser eingesetzt.)
 15 Teile Zinkoxid
```

2. Tränkmischung:

```
175 Teile carboxylgruppenhaltiges
    Acrylsäureestercopolymer (Bindemittel als 50%ige
    Dispersion eingesetzt)
200 Teile Zinkborat        ⎫  Flammschutzmittel (als
 10 Teile Chlorparaffin    ⎬  70%ige Aufschlämmung in
 15 Teile Antimontrioxid   ⎭  Wasser eingesetzt.)
 15 Teile Zinkoxid
```

Je nach den gewünschten Eigenschaften kann das Mischungsverhältnis (Bindemittel/Flammschutzmittel) von 1 : 1 bis 1 : 3 variiert werden.

Diese Tränkmischungen sind hervorragend geeignet, Polyurethanschaumstoffe flammfest auszurüsten und übertreffen die in den DE-OS 37 32 238 und DE-OS 37 32 239 angegebenen Imprägniermischungen deutlich in der Wärmebeständigkeit.

**Ansprüche**

1. Imprägnierlatex für offenzelligen Polyurethanschaum, enthaltend als wässrige Dispersion bzw. Aufschlämmung neben Flammschutzmitteln als Bindemittel ein carboxylgruppenhaltiges Acrylsäureestercopolymer.

2. Imprägnierlatex nach Anspruch 1, dadurch gekennzeichnet, daß das carboxylgruppenhaltige Acrylsäureestercopolymer einen Glasübergangsbereich $T_g$ von unter $0\,^\circ$C hat.

3. Imprägnierlatex nach Anspruch 2, dadurch gekennzeichnet, daß das Copolymer hergestellt ist aus carboxylgruppenhaltigem Acrylsäureester von Alkoholen mit 2-8 C-Atomen, bevorzugt n-Butylalkohol mit Comonomeren mit einem $T_g$ von über $0\,^\circ$C, bevorzugt Vinylacetat.

4. Imprägnierlatex nach Anspruch 1, dadurch gekennzeichnet, daß das Copolymer einen $T_g$ zwischen $0\,^\circ$C und $-60\,^\circ$C, insbesondere $0\,^\circ$C und $-30\,^\circ$C hat, wobei der $T_g$ der Acrylsäureestercomponente des Copolymeren zwischen $0\,^\circ$C und $-60\,^\circ$C, insbesondere zwischen $-20\,^\circ$C und $-50\,^\circ$C liegt und der $T_g$ des Comonomeren im Copolymer einen Glasübergangspunkt von $0\,^\circ$C bis $120\,^\circ$C, insbesondere von $20\,^\circ$C bis $110\,^\circ$C aufweist.

5. Imprägnierlatex nach Anspruch 1, dadurch gekennzeichnet, daß als Flammschutzmittel Aluminiumhydroxid oder Zinkborat, Antimontrioxid und Chlorparaffin enthalten sind.

6. Imprägnierlatex nach Anspruch 1, dadurch gekennzeichnet, daß weitere Hilfsmittel zugesetzt sind, wie Alterungs- und/oder Konservierungsmittel

7. Imprägnierlatex nach Anspruch 1 , mit einem Feststoffgehalt an Bindemittel von 30 - 70 Gew.-% insbesondere 40 - 60 Gew,-%.

8. Verwendung eines Imprägnierlatex nach einem der Ansprüche 1 - 7 für die Ausrüstung von offenzelligem PU-Schaum.

9. Verwendung eines Bindemittels nach einem der Ansprüche 1 - 4 in einer Imprägnierlatex gemäß Anspruch 7.

10. Bindemittel nach einem der Ansprüche 1 - 4, zur Verwendung in einer Imprägnierlatex gemäß Anspruch 7.